# DEMANDE DE BREVET EUROPEEN

(11) **EP 1 211 792 A1**
(43) Date de publication de la demande: **05.06.2002**
(21) Numéro de dépôt: 01402982.1
(22) Date de dépôt: 21.11.2001
(51) Int. Cl.: H02M 3/158

(54) **Convertisseur de tension en courant continu**

(30) Priorité: 01.12.2000 FR 0015572
(71) Demandeur: Cytale, 92100 Boulogne (FR)
(72) Inventeur: Legros, Eric Jean-Claude, 92260 Foontenay-Aux-Roses (FR)
(74) Mandataire: Burbaud, Eric

(57) **Abrégé**

Convertisseur de tension comprenant une inductance (L1) montée en série avec une diode (D1), une capacité (C1) montée en dérivation entre la borne de sortie (3) et la masse, un premier interrupteur (FET1) monté en dérivation entre la masse et un premier noeud (N1) disposé entre l'inductance (L1) et la première diode, un deuxième interrupteur (FET2) monté en parallèle de la première diode, un troisième interrupteur (FET3) monté en série entre la borne d'entrée (2) et l'inductance, et une deuxième diode (D2) montée en dérivation entre la masse et un deuxième noeud (N2) disposé entre le troisième interrupteur (FET3)et la première inductance, cette deuxième diode étant passante dans un sens allant de la masse vers le deuxième noeud (N2).

## Description

La présente invention est relative aux convertisseurs de tension en courant continu.

Plus particulièrement, l'invention concerne un convertisseur de tension en courant continu, comprenant :
- une borne d'entrée recevant une certaine tension d'entrée,
- une borne de sortie présentant une certaine tension de sortie,
- au moins une première inductance montée en série entre les bornes d'entrée et de sortie,
- un premier dispositif redresseur monté en série entre la première inductance et la borne de sortie,
- un premier interrupteur monté en dérivation entre la masse et un premier noeud disposé entre la première inductance et le premier dispositif redresseur,
- et des moyens de commande adaptés pour alternativement ouvrir et fermer le premier interrupteur en modulant son rapport cyclique de façon à élever la tension de sortie par rapport à la tension d'entrée et maintenir ladite tension de sortie voisine d'une valeur prédéterminée, dans une première plage de fonctionnement.

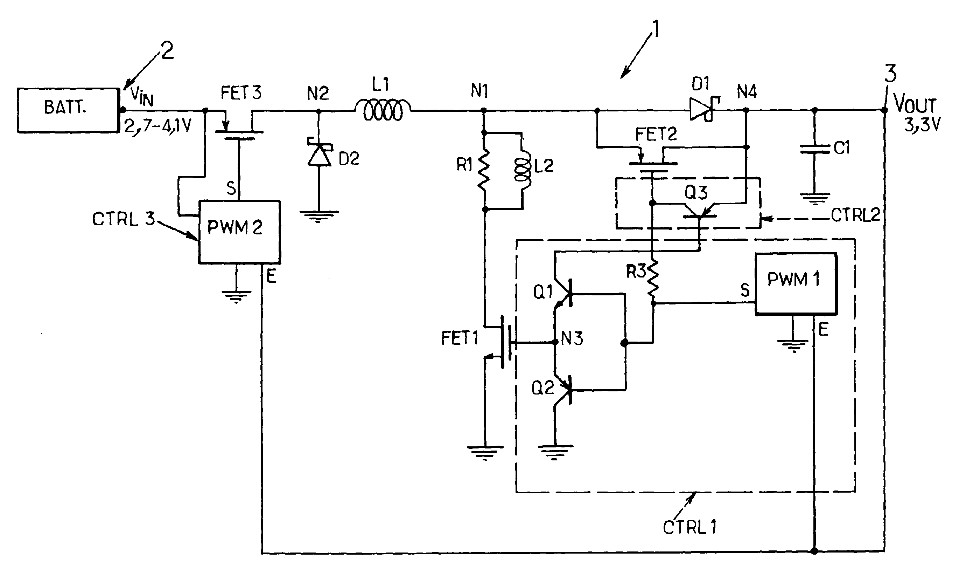

Le document US-A-5 994 882 montre sur sa figure 2 un exemple de convertisseur de tension de ce type, qui présente toutefois l'inconvénient de fonctionner uniquement en mode élévateur de tension, mais non en mode abaisseur de tension.

Le convertisseur décrit dans le document US-A-5 982 161 ne fonctionne, à l'inverse, qu'en mode abaisseur de tension.

Enfin, le document DE 43 06 070 divulgue un convertisseur pouvant fonctionner dans les deux modes élévateur et abaisseur de tension, mais qui présente un faible rendement énergétique.

La présente invention a notamment pour but de pallier ces inconvénients.

A cet effet, selon l'invention, un convertisseur de tension du genre en question est caractérisé en ce qu'il comporte en outre :
- un interrupteur abaisseur de tension monté en série entre la borne d'entrée et la première inductance,
- un deuxième dispositif redresseur monté en dérivation entre la masse et un deuxième noeud disposé entre l'interrupteur abaisseur de tension et la première inductance,
- un deuxième interrupteur monté en parallèle du premier dispositif redresseur,
en ce que les moyens de commande sont adaptés pour alternativement ouvrir et fermer l'interrupteur abaisseur de tension dans une deuxième plage de fonctionnement de façon à abaisser alors la tension de sortie par rapport à la tension d'entrée, en modulant le rapport cyclique de l'interrupteur abaisseur de tension de façon à maintenir ladite tension de sortie voisine de ladite valeur prédéterminée,
en ce que les moyens de commande sont adaptés pour maintenir ouvert le premier interrupteur dans sensiblement toute la deuxième plage de fonctionnement et pour maintenir fermé l'interrupteur abaisseur de tension dans sensiblement toute la première plage de fonctionnement,
et en ce qu'il comporte des moyens pour commander le deuxième interrupteur par alternance de façon qu'il soit ouvert et fermé sensiblement en opposition de phase par rapport au premier interrupteur.

Grâce à ces dispositions, le circuit convertisseur est capable de fonctionner aussi bien en mode élévateur qu'abaisseur de tension, et ce avec un excellent rendement.

Dans des modes de réalisation préférés de l'invention, on peut éventuellement avoir recours en outre à l'une et/ou à l'autre des dispositions suivantes :
- les moyens de commande comportent :
   . un premier dispositif de commande pour commander le premier interrupteur, ce premier dispositif de commande étant adapté pour alternativement ouvrir et fermer le premier interrupteur lorsqu'un signal de retour lié à la tension de sortie est inférieur à un premier seuil, et pour maintenir ouvert le premier interrupteur lorsque le signal de retour est supérieur audit premier seuil,
   . et un dispositif de commande abaisseur de tension pour commander l'interrupteur abaisseur de tension, ce dispositif de commande abaisseur de tension étant adapté pour alternativement ouvrir et fermer l'interrupteur abaisseur de tension lorsque le signal de retour est supérieur à un deuxième seuil et pour maintenir fermé l'interrupteur abaisseur de tension lorsque le signal de retour est inférieur audit deuxième seuil ;
- le premier seuil est inférieur au deuxième seuil ;
- les moyens pour commander le deuxième interrupteur sont adaptés pour fermer ledit deuxième interrupteur à chaque alternance avec un certain retard par rapport à l'ouverture du premier interrupteur ;
- au moins les premier et deuxième interrupteurs sont des premier et deuxième transistors MOS et le premier dispositif de commande comprend :
   . un premier circuit de contrôle à modulation de rapport cyclique comportant d'une part, une sortie reliée par une résistance à la grille du deuxième transistor MOS, et d'autre part, une entrée reliée à la borne de sortie du circuit convertisseur,
   . un transistor NPN dont la base est reliée à la sortie du premier circuit de contrôle à modulation de rapport cyclique,
   . un premier transistor PNP dont la base est également reliée à la sortie du premier circuit de contrôle à modulation de rapport cyclique, dont l'émetteur est relié à l'émetteur du premier transistor NPN et dont le collecteur et relié à la masse,
la grille du premier transistor MOS étant reliée à un troisième noeud disposé entre les émetteurs du transistor NPN et du premier transistors PNP,
et le deuxième transistor MOS étant commandé par un deuxième circuit de commande qui comprend un deuxième transistor PNP dont l'émetteur est relié à un quatrième noeud disposé entre le premier dispositif redresseur et la borne de sortie, le collecteur du deuxième transistor PNP étant relié à la grille du deuxième transistor MOS et la base du deuxième transistor PNP étant reliée au collecteur du transistor NPN ;
- le premier interrupteur est relié au premier noeud par l'intermédiaire d'une résistance en parallèle avec une inductance ;
- au moins le troisième interrupteur est un transistor MOS, et le dispositif de commande abaisseur de tension comprend un deuxième circuit de contrôle à modulation de rapport cyclique comportant d'une part, une sortie commandant l'interrupteur abaisseur de tension, et d'autre part, une entrée reliée à la borne de sortie du circuit convertisseur ;
- le convertisseur de tension comporte en outre au moins une capacité montée en dérivation entre la borne de sortie et la masse.

D'autres caractéristiques et avantages de l'invention apparaîtront au cours de la description suivante d'une de ses formes de réalisation, donnée à titre d'exemple non limitatif, en regard du dessin joint.

Sur le dessin, la figure unique est un schéma simplifié d'un circuit convertisseur de tension 1 selon une forme de réalisation de l'invention, adapté pour fournir au niveau d'une borne de sortie 3, une tension de sortie continue V_{OUT} régulée par exemple à environ 3,3 V, à partir d'une tension d'entrée continue V_{IN} fournie à une borne d'entrée 2 par une batterie BATT. La batterie peut être par exemple de type lithium-ion, auquel cas la tension d'entrée V_{IN} au niveau de la borne d'entrée 2 peut être comprise par exemple entre 2,7 et 4,1 V.

Entre les bornes d'entrée 2 et de sortie 3 sont montés en série une inductance L1 et un dispositif redresseur D1 tel qu'une diode qui est passante dans le sens allant de l'inductance L1 vers la borne de sortie 3.

De plus, une capacité C1 peut avantageusement être montée en dérivation entre la borne de sortie 3 et la masse, tandis qu'un premier interrupteur FET1 est monté en dérivation entre la masse et un premier noeud N1 situé entre l'inductance L1 et la diode D1.

Avantageusement, le premier interrupteur FET1 est un transistor MOS à effet de champ de type N, dont la source est reliée à la masse.

De préférence, une résistance R1 est montée en série entre le noeud N1 et le transistor FET1, et une inductance L2 est montée en parallèle avec la résistance R1, pour des raisons qui seront expliquées ci-après.

La grille du transistor FET1 est reliée à un premier circuit de commande CTRL1 qui comporte avantageusement un circuit de contrôle à modulation de largeur d'impulsions PWM1 dont l'entrée E est reliée à la borne de sortie 3. Eventuellement, le circuit de contrôle PWM1 pourrait être remplacé par un contrôleur à modulation de fréquence d'impulsions, ou par tout autre circuit permettant de moduler le rapport cyclique du Transistor FET1.

Par ailleurs, la sortie S du circuit de contrôle PWM1 est reliée à la base d'un transistor NPN Q1 et à la base d'un transistor PNP Q2.

Les émetteurs des deux transistors Q1, Q2 sont reliés ensemble au niveau d'un noeud N3 qui lui-même est relié à la grille de l'interrupteur FET1.

De plus, un interrupteur FET2 est monté en parallèle de la diode D1 de façon à pouvoir la court-circuiter, cet interrupteur FET2 étant commandé de façon à être ouvert et fermé sensiblement en opposition de phase par rapport au premier interrupteur FET1, de préférence avec un certain retard à la fermeture par rapport à l'ouverture de l'interrupteur FET1.

Avantageusement, l'interrupteur FET2 peut être constitué par un transistor MOS à effet de champ de type P dont la source est reliée à l'entrée de la diode D1, dont le drain est relié à la sortie de la diode D1 et dont la grille est reliée à la fois par une résistance R3 à la sortie S du circuit PWM1 et à un deuxième circuit de commande CTRL2 commandé par le premier circuit de commande CTRL1.

Avantageusement, le deuxième circuit de commande CTRL2 comprend un transistor PNP Q3 dont l'émetteur est relié à la sortie de la diode D1, dont le collecteur est relié à la grille du transistor FET2 et dont la base est reliée au collecteur du transistor Q1.

On notera par ailleurs que la diode D1 pourrait ne pas être physiquement distincte du transistor FET2, mais au contraire être constituée par la diode intégrée audit transistor FET2.

Les éléments qui viennent d'être décrits permettent au circuit convertisseur de tension de fonctionner en mode élévateur de tension.

Par ailleurs, pour permettre au dispositif de fonctionner en mode abaisseur de tension, le circuit comporte en outre :
- un troisième interrupteur FET3, monté en série entre la borne d'entrée 2 et l'inductance L1, un deuxième dispositif redresseur tel qu'une diode D2 monté en dérivation entre la masse et un noeud N2 situé entre l'interrupteur FET3 et l'inductance L1, la diode D2 étant passante de la masse vers le noeud N2,
- et un circuit de commande CTRL3 destiné à faire fonctionner le dispositif en mode abaisseur de tension, ce dispositif de commande CTRL3 étant adapté pour commander le troisième interrupteur FET3 de façon à moduler son rapport cyclique.

Avantageusement, le troisième interrupteur FET3 est constitué par un transistor MOS à effet de champ de type P dont la source est reliée à la borne d'entrée 2, dont le drain est relié au noeud N2 et dont la grille est reliée au dispositif de commande CTRL3.

De préférence, le dispositif de commande CTRL3 peut être constitué par un deuxième circuit de contrôle PWM2 à modulation de largeur d'impulsions dont la sortie S est reliée à la grille du transistor FET3 et dont l'entrée E est reliée à la borne de sortie 3. Le circuit PWM2 pourrait être remplacé éventuellement par un contrôleur à modulation de fréquence d'impulsions, ou par tout autre circuit permettant de moduler le rapport cyclique du transistor FET3.

On notera que la diode D2 pourrait être le cas échéant court-circuitée par un transistor MOS supplémentaire (non représenté) commandé pour être ouvert et fermé en opposition de phase par rapport au transistor FET3. Le cas échéant, ladite diode D2 pourrait alors être constituée par la diode interne audit transistor MOS supplémentaire.

Par ailleurs, les deux circuits de contrôle à modulation de largeur d'impulsion PWM1 et PWM2 pourraient être constitués par exemple, respectivement par des circuits de type XC6372 et XC6365 commercialisés par la Société TOREX SEMICONDUCTOR LIMITED, TOKYO, JAPON. Chacun des deux circuits PWM1 et PWM2 comporte une consigne interne préprogrammée, respectivement S1, S2.

S1 détermine la tension V_{OUT} au-dessus de laquelle la sortie S du circuit PWM1 reste à 0 (état bas) en permanence, de sorte que le circuit convertisseur cesse alors de fonctionner en mode élévateur de tension. Par ailleurs, S2 détermine la tension V_{OUT} au-dessous de laquelle la sortie S du circuit PWM2 reste à 0 (état bas) en permanence, de sorte que le circuit convertisseur cesse alors de fonctionner en mode abaisseur de tension. La valeur S1 peut être choisie de préférence inférieure à S2, S1 pouvant être par exemple de l'ordre de 3,2 à 3,3 V (par exemple 3,3 V) et S2 de l'ordre de 3,3 à 3,5 V (par exemple 3,45 V).

Ainsi, tant que la tension de sortie V_{OUT} du circuit convertisseur est comprise entre S1 et S2, l'interrupteur FET1 reste ouvert tandis que les interrupteurs FET2 et FET3 restent fermés, de sorte que les tensions d'entrée et de sortie restent égales.

Lorsque la tension de sortie V_{OUT} du circuit convertisseur est inférieure à S1, la sortie S du circuit PWM2 reste à 0 et l'interrupteur FET3 reste fermé en permanence. Dans ce cas, la sortie S du circuit PWM1 varie alternativement entre 0 et 1, avec un rapport cyclique fonction de l'écart entre la tension de sortie et la tension S1 ou une autre tension de consigne, de façon connue en soi.

A chacune de ces alternances, lorsque la sortie S du circuit PWM1 passe à 0, l'interrupteur FET1 s'ouvre, de sorte que l'inductance L1 restitue vers la borne de sortie 3 l'énergie qu'elle avait emmagasinée. La grille de l'interrupteur FET2, initialement déchargée, se charge alors par la résistance R3, de sorte que cette grille passe à 0, ce qui a pour effet de fermer cet interrupteur FET2 avec un certain retard par rapport à l'ouverture de l'interrupteur FET1 en évitant ainsi que les interrupteurs FET1 et FET2 ne soient simultanément fermés (ce qui aurait pour effet de créer un fort appel de courant vers FET1 et de décharger partiellement la capacité C1). La diode D2 est alors court-circuitée, ce qui améliore le rendement du circuit convertisseur de tension.

Lorsque la sortie S du circuit PWM1 passe à 1, l'interrupteur FET1 se ferme, de sorte que l'inductance L1 emmagasine à nouveau de l'énergie. De plus, le transistor Q3 devient passant, ce qui décharge quasi-instantanément la grille de l'interrupteur FET2 qui repasse à 1, ce qui a pour effet d'ouvrir immédiatement cet interrupteur FET2. On évite ainsi que les interrupteurs FET1 et FET2 ne soient simultanément fermés.

De plus, pour le cas où ces deux interrupteurs resteraient simultanément fermés pendant un très court instant, l'inductance L2 limite l'appel de courant vers FET1 et évite ainsi de décharger partiellement la capacité C1 et de générer une onde électromagnétique parasite. Dans un tel cas, la résistance R1 permet ensuite à l'inductance L2 de se décharger, à nouveau sans générer une onde électromagnétique parasite.

Par ailleurs, lorsque la tension de sortie V_{OUT} du circuit convertisseur est supérieure à S2, la sortie S du circuit PWM1 reste à 0 et l'interrupteur FET 1 reste ouvert en permanence tandis que l'interrupteur FET2 reste fermé. En revanche, la sortie S du circuit PWM2 varie alors alternativement entre 0 et 1, avec un rapport cyclique modulé en fonction de l'écart entre la tension de sortie et la tension S2 ou une autre tension de consigne, de façon connue en soi. On abaisse ainsi la tension au travers de l'inductance L1 en emmagasinant de l'énergie dans cette inductance lorsque l'interrupteur FET3 est fermé, puis on restitue cette énergie vers la sortie 3 lorsque l'interrupteur FET3 est ouvert.

On notera que les circuits PWM1 et PWM2 pourraient recevoir chacun à leur entrée E une tension ou une autre grandeur électrique (éventuellement différente pour les circuits PWM1 et PWM2) liée à une tension V_{OUT} mais différente de celle-ci, ou liée à la tension V_{IN}.

De plus, au lieu d'avoir chacun une valeur de seuil S1, S2 préprogrammée, ces circuits pourraient recevoir un signal indiquant cette valeur de seuil, ou encore ils pourraient être activés ou désactivés par un circuit supplémentaire qui mesurerait une grandeur électrique liée à la tension V_{OUT} ou V_{IN}, et qui déterminerait ainsi lequel des deux circuits PWM1, PWM2 doit être mis en fonctionnement.

Par ailleurs, bien que la description ci-dessus ait été faite dans le cas où la masse représente le potentiel négatif, il serait bien entendu possible de prévoir que la masse représente le potentiel positif, auquel cas les transistors de type P seraient à remplacer par des transistors de type N, les transistors de type N à remplacer par des transistors de type P, les transistors de type NPN à remplacer par les transistors de type PNP et les transistors de type PNP par des transistors de type NPN. Dans ce cas, le sens passant des diodes devrait également être inversé.

## Revendications

1. Convertisseur de tension en courant continu, comprenant :
- une borne d'entrée (2) recevant une certaine tension d'entrée (V_{IN}),
- une borne de sortie (3) présentant une certaine tension de sortie (V_{OUT}),
- au moins une première inductance (L1) montée en série entre les bornes d'entrée et de sortie (2, 3),
- un premier dispositif redresseur (D1) monté en série entre la première inductance (L1) et la borne de sortie (3),
- un premier interrupteur (FET1) monté en dérivation entre la masse et un premier noeud (N1) disposé entre la première inductance (L1) et le premier dispositif redresseur (D1),
- et des moyens de commande (CTRL1, CTRL2) adaptés pour alternativement ouvrir et fermer le premier interrupteur (FET1) en modulant son rapport cyclique de façon à élever la tension de sortie (V_{OUT}) par rapport à la tension d'entrée (V_{IN}) et pour maintenir ladite tension de sortie voisine d'une valeur prédéterminée, dans une première plage de fonctionnement correspondant à des tensions de sortie inférieures à ladite valeur prédéterminée,
**caractérisé en ce qu**'il comporte en outre :
- un interrupteur abaisseur de tension (FET3) monté en série entre la borne d'entrée (2) et la première inductance (L1),
- un deuxième dispositif redresseur (D2) monté en dérivation entre la masse et un deuxième noeud (N2) disposé entre l'interrupteur abaisseur de tension (FET3) et la première inductance (L1),
- un deuxième interrupteur (FET2) monté en parallèle du premier dispositif redresseur (D1),
**en ce que** les moyens de commande (CTRL1, CTRL2, CTRL3) sont adaptés pour alternativement ouvrir et fermer l'interrupteur abaisseur de tension (FET3) dans une deuxième plage de fonctionnement, de façon à abaisser alors la tension de sortie par rapport à la tension d'entrée, en modulant le rapport cyclique de l'interrupteur abaisseur de tension (FET3) de façon à maintenir ladite tension de sortie (V_{OUT}) voisine de ladite valeur prédéterminée,
**en ce que** les moyens de commande (CTRL1, CTRL2, CTRL3) sont adaptés pour maintenir ouvert le premier interrupteur (FET1) dans sensiblement toute la deuxième plage de fonctionnement et pour maintenir fermé l'interrupteur abaisseur de tension (FET3) dans sensiblement toute la première plage de fonctionnement,
et en ce qu'il comporte des moyens (CTRL2) pour commander le deuxième interrupteur (FET2) par alternance de façon qu'il soit ouvert et fermé sensiblement en opposition de phase par rapport au premier interrupteur (FET1).

2. Convertisseur de tension selon la revendication 1, dans lequel les moyens de commande (CTRL1, CTRL2, CTRL3) comportent :
- un premier dispositif de commande (CTRL1) pour commander le premier interrupteur (FET1), ce premier dispositif de commande étant adapté pour alternativement ouvrir et fermer le premier interrupteur (FET1) lorsqu'un signal de retour lié à la tension de sortie (V_{OUT}) est inférieur à un premier seuil, et pour maintenir ouvert le premier interrupteur lorsque le signal de retour est supérieur audit premier seuil,
- et un dispositif de commande abaisseur de tension (CTRL3) pour commander l'interrupteur abaisseur de tension (FET3), ce dispositif de commande abaisseur de tension étant adapté pour alternativement ouvrir et fermer l'interrupteur abaisseur de tension (FET3) lorsque le signal de retour est supérieur à un deuxième seuil, et pour maintenir fermé l'interrupteur abaisseur de tension lorsque le signal de retour est inférieur audit deuxième seuil.

3. Convertisseur de tension selon la revendication 2, dans lequel le premier seuil est inférieur au deuxième seuil.

4. Convertisseur de tension selon la revendication 1, dans lequel les moyens (CTRL3) pour commander le deuxième interrupteur (FET2) sont adaptés pour fermer ledit deuxième interrupteur à chaque alternance avec un certain retard par rapport à l'ouverture du premier interrupteur (FET1).

5. Convertisseur de tension selon l'une quelconque des revendications précédentes, dans lequel au moins les premier et deuxième interrupteurs (FET1, FET2) sont des transistors MOS, et le premier dispositif de commande comprend :
- un premier circuit de contrôle à modulation de rapport cyclique (PWM1) comportant d'une part, une sortie (S) reliée par une résistance (R3) à la grille du deuxième transistor MOS (FET2), et d'autre part, une entrée de signal de retour (E) reliée à la borne de sortie (3) du circuit convertisseur,
- un transistor NPN (Q1) dont la base est reliée à la sortie (S) du premier circuit de contrôle à modulation de rapport cyclique,
- un premier transistor PNP (Q2) dont la base est également reliée à la sortie (S) du premier circuit de contrôle à largeur d'impulsion, dont l'émetteur est relié à l'émetteur du premier transistor NPN (Q1) et dont le collecteur et relié à la masse,
la grille du premier transistor MOS (FET1) étant reliée à un troisième noeud (N3) disposé entre les émetteurs du transistor NPN (Q1) et du premier transistors PNP (Q2), et le deuxième transistor MOS (FET2) étant commandé par un deuxième circuit de commande (CTRL2) qui comprend un deuxième transistor PNP (Q3) dont l'émetteur est relié à un quatrième noeud (N4) disposé entre le premier dispositif redresseur (D1) et la borne de sortie (3), le collecteur du deuxième transistor PNP (Q3) étant relié à la grille du deuxième transistor MOS (FET2) et la base du deuxième transistor PNP (Q3) étant reliée au collecteur du transistor NPN (Q1).

6. Convertisseur de tension selon l'une quelconque des revendications précédentes, dans lequel le premier interrupteur (FET1) est relié au premier noeud (N1) par l'intermédiaire d'une résistance (R1) en parallèle avec une inductance (L2).

7. Convertisseur de tension selon l'une quelconque des revendications précédentes, dans lequel au moins l'interrupteur abaisseur de tension (FET3) est un transistor MOS, et le dispositif de commande abaisseur de tension comprend un deuxième circuit de contrôle à modulation de rapport cyclique (PWM2) comportant d'une part, une sortie (S) commandant l'interrupteur abaisseur de tension, et d'autre part, une entrée (E) reliée à la borne de sortie (3) du circuit convertisseur.

8. Convertisseur de tension selon l'une quelconque des revendications précédentes, comportant en outre au moins une capacité (C1) montée en dérivation entre la borne de sortie (3) et la masse.
